**Europäisches Patentamt**

**European Patent Office**

**Office européen des brevets**

(11) Veröffentlichungsnummer : **0 363 450 B1**

# (12) EUROPÄISCHE PATENTSCHRIFT

(45) Veröffentlichungstag der Patentschrift :
**19.11.92 Patentblatt 92/47**

(51) Int. Cl.$^5$ : **B01L 3/02**

(21) Anmeldenummer : **89902221.4**

(22) Anmeldetag : **21.02.89**

(86) Internationale Anmeldenummer :
**PCT/CH89/00033**

(87) Internationale Veröffentlichungsnummer :
**WO 89/10191 02.11.89 Gazette 89/26**

(54) **PIPETTIERVORRICHTUNG.**

(30) Priorität : **18.04.88 CH 1419/88**

(43) Veröffentlichungstag der Anmeldung :
**18.04.90 Patentblatt 90/16**

(45) Bekanntmachung des Hinweises auf die
Patenterteilung :
**19.11.92 Patentblatt 92/47**

(84) Benannte Vertragsstaaten :
**AT BE CH DE FR GB IT LI LU NL SE**

(56) Entgegenhaltungen :
**EP-A-01 588 52**
**EP-A-02 069 45**
**EP-A-02 155 36**
**US-A- 4 158 035**
**US-A-41 069 11**

(73) Patentinhaber : **EPR Labautomation AG**
**Carl Güntertstrasse 13a**
**CH-4310 Rheinfelden (CH)**

(72) Erfinder : **Bürgisser, Ernst, Dr.**
**Am Stutz 27**
**CH-4314 Zeiningen (CH)**

(74) Vertreter : **Frei, Alexandra Sarah**
**Frei Patentanwaltsbüro Hedwigsteig 6**
**Postfach 95**
**CH-8029 Zürich (CH)**

EP 0 363 450 B1

**Beschreibung**

Die Erfindung liegt auf dem Gebiet der analytischen Laborgeräte und betrifft eine Dosiervorrichtung mit einer Mehrzahl von gleichzeitig betätigbaren Dosierpumpen, vorzugsweise von Pipetten, die mit einem Kolben betätigt werden.

Das Automatisieren von Dosiervorgängen erfordert jeweils Dosierpumpen, die sich für die Automatisierung speziell eignen, von welchen die Kolbendosierer bis heute eine zentrale Position einnehmen. Aber auch Schlauchquetschpumpen werden zur Dosierung herangezogen wie auch verschiebbare Dosierkanäle, mit denen ein Teil der Flüssigkeitssäule abgetrennt werden kann. Alle diese Dosierpumpen werden auch in Anordnungen von mehreren solchen verwendet, um bspw. gleichzeitig eine Vielzahl gleicher Volumina aufnehmen und/oder abgeben zu können. Häufig soll zwischendurch die Pumpe ausgewaschen und mit einem anderen Liquid gefüllt werden. Dies machte Ventile erforderlich, mit denen diese Vorgänge erst steuerbar und damit automatisierbar werden.

Beispielsweise wird in der amerikanischen Patentschrift Nr. 4106911 eine derartige Vorrichtung beschrieben. Sie umfasst eine Mehrzahl von Kolbenspritzen, deren Kolben von einem zentralen Antrieb angetrieben werden, um die Spritzen simultan zu füllen und zu entleeren. Im Bereiche der Spritzenausgänge werden entsprechend geformte Vorrats- bzw. Auffanggefässe (beispielsweise eine Mikrotiterplatte) plaziert, aus denen Müssigkeit in die Spritzen aufgesogen, bzw. in die Müssigkeit aus den Spritzen abgegeben wird. Für jeden Arbeitsschritt der Vorrichtung müssen diese Gefässe ausgewechselt werden. Der Wechsel wird für die beschriebene Vorrichtung manuell ausgeführt. Eine Automation würde das Bewegen relativ grosser Gewichte über relativ grosse Strecken bedingen und deshalb die Geschwindigkeit der Funktion der ganzen Vorrichtung bestimmen.

Es ist nun die Aufgabe der Erfindung, eine Vorrichtung mit gleichzeitig betätigbaren Dosiervorrichtungen, insbesondere Pipetten, zu schaffen, mit der rascher als mit den Vorrichtungen gemäss dem Stande der Technik und mit hoher Präzision dosiert werden kann.

Diese Aufgabe wird durch die im kennzeichnenden Teil des Patentanspruchs 1 angegebene Erfindung gelöst.

Anhand der unten angegebenen Figuren wird eine Ausführungsform der Erfindung nun eingehend diskutiert. Es zeigt:

Figur 1 in stilisierter Darstellung eine Vorrichtung gemäss Erfindung in einer ersten operativen Position;

Figur 2 die Vorrichtung in einer zweiten operativen Position und

Figur 3 die Vorrichtung in einer dritten operativen Position;

Figur 4 eine konstruktive Massnahme gemäss Erfindung;

Figur 5 eine andere konstruktive Massnahme.

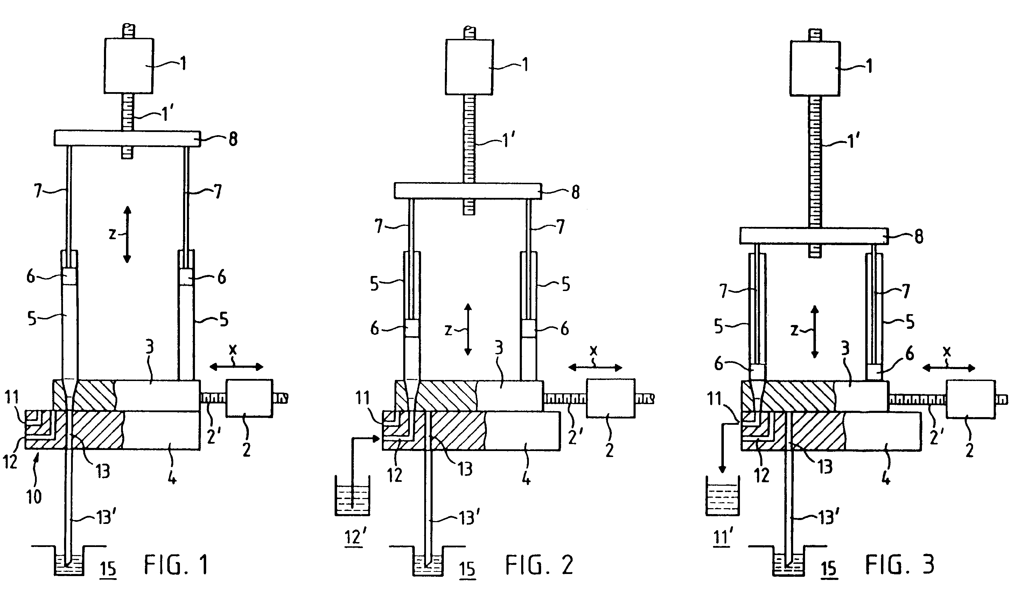

Die Figuren 1 bis 3 zeigen dieselbe Ausführungsform in drei verschiedenen Arbeitspositionen, nämlich: Figur 1 Aufsaugen, Mischen in einer Mikrotest platte (MTP); Figur 2 Aufsaugen aus einem Vorratsbehälter, Dispensieren, waschen; Figur 3 Entsorgen in einen Sammelbehälter. Die verschiedenen Arbeitspositionen werden durch Verschieben von Geräteteilen herbeigeführt. Dargestellt ist eine von einer Vielzahl gleichartiger Ventilfunktionen an einer Pipette, die alle gleichzeitig operativ sind. Gezeigt ist eine weitere Pipette. In der Tat sind es in der diskutierten Ausführungsform deren 96, die zu einem spiegelbildlichen Raster (Array) entsprechend den Kavitäten einer Mikrotiterplatte angeordnet sind.

Die diskutierte Vorrichtung besteht im wesentlichen aus einem ersten motorischen Antrieb 1, der über eine Spindel 1', vorzugsweise in vertikaler Richtung z, eine Vielzahl von an einer Kolbenstange 7 verschiebbare Spritzenkolben 6 antreibt; aus einem zweiten motorischen Antrieb 2, der über eine Spindel 2', vorzugweise in horizontaler Richtung, eine Trägerplatte 3 verschiebbar antreibt; einer feststehenden Ventilplatte 4 mit einem Kanalsystem 10 aus den Kanälen 11,12,13 bestehend und aus einer Mehrzahl von Pipettenzylindern 5, die in einer später noch darzustellenden Art in der Trägerplatte 3 angeordnet sind.

In der diskutierten Ausführungsform besteht die Mehrzahl der Pipetten aus 96 Exemplaren, wobei jeder Pipette hier 3 Kanäle des Kanalsystems 10 zugeordnet sind, das heisst, dass die Ventilplatte 4 in ihrer der Trägerplatte zugekehrten Seite 288 Einlassöffnungen aufweist, die mit den Pipetten durch Verschiebung der Trägerplatte wahlweise in eine Wirkverbindung bringbar sind. Das Kanalsystem 10 besteht hier aus Reagenszuführkanälen 12 (zu allen 96 Pipetten), aus Entsorgunngskanälen 11 (zu allen 96 Pipetten) und aus Kanälen 13 zur Bedienung der MTP-Kavitäten (für alle 96 Pipetten). Die Bedienungskanäle setzen sich bspw. in Form einer Hohlnadel 13' fort, die in die Kavität der MTP eingeführt werden kann. Von unten besehen, sieht die Vorrichtung also ziemlich stachlig aus, 96 Nadeln ragen im MTP-Raster angeordnet aus der Ventilplatte hervor. An diese Nadeln werden die Mikrotiterplatten zur Bearbeitung herangeführt. An Stelle von Hohlnadeln können für die Weiterführung 13' der Kanäle 13 handelsübliche Einwegplastikspitzen, die bei bedarf ausgewechselt, bzw. ersetzt werden können, verwendet weden. Der Wechsel von solchen Plastikspitzen kann ebenfalls automatisch mittels einer lochplattenartigen Vorrichtung mit eingelegten neuen Spitzen, die in die MTP-Zuführvorrichtung eingelegt wird, durchgeführt werden.

Hier in den nur das Prinzip der Erfindung anzeigenden Figuren dieser Ausführungsform nicht dargestellt, sind:

- eine Steuerung für den ersten und den zweiten motorischen Antrieb, die natürlich alternativ zueinander operieren, wobei der erste Antrieb die Pipetten, vorzugsweise handelsübliche Spritzen, aufzieht und entleert und der zweite Antrieb die Trägerplatte zwischen einer der drei Positionen bewegt

- eine solche Steuerung wird bspw. über μP bzw. Software in ein Analyseprogramm eingebunden-;

- Führungsmittel für die Trägerplatte, die bspw. nur eine definierte Schub-/Zugbewegung in x-Richtung gestatten;

- starre Befestigungen, bspw. zwischen dem ersten Antrieb 1 und der Trägerplatte 3;

- Grundplatte und Gehäuse, fest verbunden mit dem zweiten Antrieb 2 und der Ventilplatte 4;

- eine Hubvorrichtung für die Zuführung einer Mikrotiterplatte 15 an den Kanülenarray der Vorrichtung und

- die Gesamtheit der Zuführ- (12) und Abführkanäle 11 des Kanalsystems 10 in der Ventilplatte 4.

Das Kanalsystem 10 ist durch ein Netz (vorzugsweise wie in einem Schachbrett rechtwinklig zueinanderstehenden) von die Ventilplatte 4 durchlaufenden Bohrungen in zwei Ebenen (für Füllen und für Entsorgen), in welche Bohrungen die Anschlüssen an die 96 Einlassöffnungen münden und welche zwei Bohrungsnetze in einen gemeinsamen Auslass münden. Alle übrigen, durch die Herstellung bedingten Oeffnungen zum Leitungsnetz werden verschlossen. Es können auch mehrere Zapfstellen am Netz ausserhalb diesem zu einem gemeinsamen Ein-/Auslass zusammengeführt werden.

Im Betrieb sind alle Kanalteile definiert mit Flüssigkeit gefüllt und frei von Luftblasen. Vorteilhafterweise beginnt man mit einem Füllhub durch den Zuführkanal 12 und einem anschliessenden Ausstossen durch den Abführkanal 11, solange bis das Kanalwerk blasenfrei ist. Auch mit einem Füllhub durch die Kanülen 13, durch welche die Wege zu jeder einzelnen Pipette gleich lang sind, das heisst, gleich Volumina pro Hub in die Pipetten eingezogen werden, kann die Füllung begonnen werden. Anschliessend wird durch Umstellen auf eines der beiden Netze das Kanalwerk gefüllt und die Luft ausgestossen.

Eine zweidimensionale Anordnung von 288 Einlässen in der einen und 96 Zuführungen in der anderen Ebene, welche Ebenen sich relativ zueinander bewegen und exakte Positionen einnehmen müssen und ferner mit der Auflage, dass alle getätigten 96 Anschlüsse sicher funktionieren müssen, denn wenn nur ein einziger Anschluss versagt, so ist der MTP-Ansatz verworfen, bringt Dichtungsprobleme mit sich.

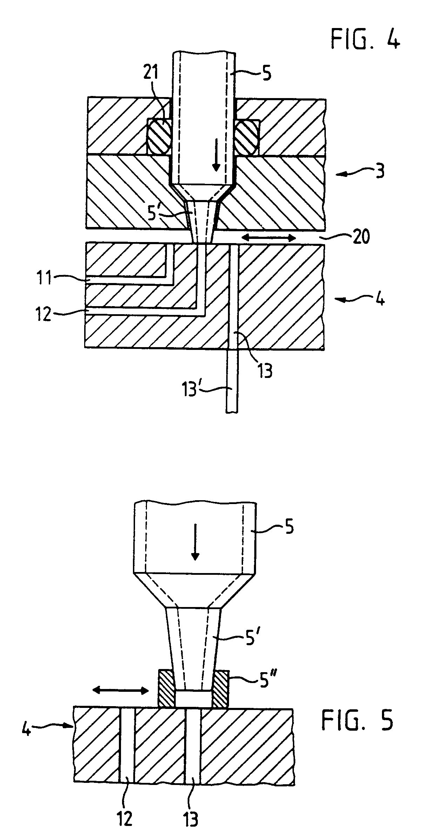

Figur 4 geht nun auf diese Problematik ein. Zwei verschiebbare Platten so aufeinander zu halten, dass sie an jedem Ort die gleiche Dichtigkeit aufweisen ist äusserst problematisch. Zum Abdichten muss auf die Dichtflächen Druck ausgeübt werden, beim Beaufschlagen von Druck verformen sich die Platten, wenn auch nur leicht, so doch genügend, um undichte Zonen zu bilden. Bei einer Anordnung von 288 abzudichtende Stellen in einem Array von 12x8cm kann eine undichte Zone die Analyse ruinieren. Aus diesem Grund wurde das Dichtproblem Platte gegen Platte umgangen und die Idee realisiert, dass jede Pipette für ihre eigene Dichtigkeit sorgt. Die kollektive Dichtung von 96 Pipetten wurde in eine individuelle Dichtung dieser Pipetten umgestaltet und damit die Anforderung an eine nur mit hohem Aufwand, bisweilen gar kaum zu realisierende Parallelität der Transferebenen mit bei zunehmender Fläche zunehmendem Risiko in eine leicht zu realisierende Transferlösung bei niedrigem und erst noch geteilten Risiko gewandelt.

Jede Pipette wird an ihrer Auslaufstelle mit der nötigen Federkraft auf die Ventilplatte mit den Ventilöffnungen abgestützt und unter diesem Federdruck bei Bedarf auf der Transferfläche verschoben. Die Parallelität von Ventilplatte und Trägerplatte ist nebensächlich und das lokale Dichtproblem zwischen Pipettenauslauf und Ventilplatte mit geringem Aufwand lösbar.

Figur 4 zeigt in einer Prinzipdarstellung wie so etwas realisiert werden kann. Die Fläche mit den drei Oeffnungen für die Kanäle 11, 12, 13 der Ventilplatte 4 und die Spritzentülle 5′ der Pipette 5 in der Trägerplatte 3 bilden eine Transferzone im Transferspalt 20. Der Doppelpfeil im Transferspalt 20 zeigt die Verschiebebewegung an, mit welcher die Tülle 5′ von einem Einlass zum anderen geschoben wird. Die Tülle 5′ wird durch eine adäquat starke Kraft auf die Ventilplatte 4 gepresst; dies geschieht über ein Mittel (Federn, Elastomere usw.) welches diese Kraft ausüben kann. In Fig. 4 ist es bspw. ein in der Trägerplatte eingespannter O-Ring, der im Reibschluss zum Pipettenzylinder angeordnet ist und dessen elastische Kraft bei Verformung des O-Rings die Tülle gegen die Ventilplatte presst. Dieser Sachverhalt ist durch den kleinen, abwärtsgerichteten Pfeil im Zylinder angedeutet. Ein anderes Vorgehen Federwirkung zu erzielen besteht darin, die Pipettenzylinder am oberen, der Tülle 5 entgegengesetzten Ende, einer Federkraft auszusetzen, in dem bspw. eine Druckschraubenfeder mittels einer Abstützplatte, welche mit der Trägerplatte 3 fest verbunden ist, auf den Zylinderoberteil zu drükken. Auch mit einer elastische Matte mit Löchern für die Durchführung der Kolben können die Zylinder nach unten gepresst werden, in dem bspw. in gleichmässiger Verteilung mit Stiften, die auf einer gemeinsamen Platte angeordnet sein können, auf die Matte gedrückt wird.

Wenn man als Pipetten handelsübliche bspw. handelsübliche Plastikspritzen verwenden will, so kann auf die Tülle 5′ ein Abdichtungsring 5″ bspw. aus Teflon aufgesetzt werden. Die Gleitreibung eines solchen Abdichtungsringes ist klein und die Dichtwirkung sehr befriedigend und der Preis vernachlässigbar. Die Einfachheit der Konstruktion lässt Spielraum für "individuelle" Zonenabdichtungen bezüglich Material und Formgebung.

Beim Zusammenbau der Vorrichtung kann die Trägerplatte 3 mit dem Array von Pipetten, die federnd gelagert allesamt unten aus der Trägerplatte ein wenig hinausragen, auf die bodenfeste Ventilplatte aufgesetzt und mittels bspw. vier in den Ecken der Trägerplatte angeordnete Gasdruckfedern angepresst werden. Eine Verformung der Platte beeinträchtigt nun die Dichtigkeit nicht mehr, da sie durch das vertikale Spiel der Pipetten ausgeglichen wird. Eine solche Anordnung ist dann leicht zerlegbar, um bspw. die Pipetten (Spritzen) gegen neue auszutauschen.

Auf die gezeigte Art, können auch Anordnungen von mehr als 96 Pipetten realisiert werden. Die oben angegebene Zahl ist deswegen interessant, da Mikrotiterplatten standardmässig 96 Kavitäten aufweisen. Bis heute hat es noch keine einfache, kostengünstige und wirklich auch dichte Pipettier-Vorrichtung gegeben, die alle 96 Kavitäten gleichzeitig zu manipulieren im Stande ist, was für die Automatisierung natürlich ein grosses Hindernis war.

Die Vorrichtung weist also im wesentlichen einen ersten motorischen Antrieb 1, der über eine Spindel 1′, vorzugsweise in vertikaler Richtung z, eine Vielzahl von an einer Kolbenstange 7 verschiebbare Spritzenkolben 6 antreibt; und einen zweiten motorischen Antrieb 2, der über eine Spindel 2′, vorzugweise in horizontaler Richtung, eine Trägerplatte 3 verschiebbar antreibt auf. Auf einer feststehenden Ventilplatte 4 mit einem Kanalsystem 10 aus Kanälen 11, 12, 13 für Zu- und Abführung von Flüssigkeit ist eine Trägerplatte mit einer Mehrzahl von Pipettenzylindern 5, die in der Trägerplatte 3 angeordnet sind, gegen den Federdruck von Mitteln 21 an den Pipetten angepresst. Jede einzelne Pipette wird nämlich an ihrer Auslaufstelle mit Federkraft auf die Ventilplatte mit den Ventilöffnungen abgestützt und unter diesem Federdruck bei Bedarf auf der Transferfläche verschoben, dabei weist jede Pipette Mittel wie Federn, elastische Ringe und dergleichen für die Ausübung einer solchen Federkraft auf. Die Trägerplatte 3 wird ihrerseit gegen den Gegendruck der Federmittel der einzelnen Pipetten ebenfalls mittels Federdruck auf die Ventilplatte gepresst. Dies kann bspw. mittels Gasdruckfedern bewerkstelligt werden. Der Federdruck auf die Trägerplatte wird grösser gewählt, als die Summe aller Federdrücke der einzelnen Pipetten ergibt. So wird bspw. jede Pipette mit einer Federkraft von 600g auf die Ventilplatte gedrückt, so ergibt dies einen Gesamtdruck von nahezu 60kg. Die Gasdruckfedern werden dann so ausgewählt, dass mit ihnen ein Druck von 80 bis 100kg auf die Trägerplatte ausgeübt werden kann.

## Patentansprüche

1. Vorrichtung zum Dosieren von Flüssigkeit mit einer Mehrzahl von gleichzeitig betätigbaren Dosierpumpen, vorzugsweise Pipetten (5), die mit je einem Kolben (6) betätigt werden, **dadurch gekennzeichnet**

   dass sie eine Trägerplatte (3) aufweist, in der in durchgehenden Öffnungen die Pipetten (5) angeordnet sind,

   dass sie eine zur Trägerplatte (3) parallel angeordnete Ventilplatte (4) aufweist, gegen die die Austaufenden der Pipetten gerichtet sind und die ein Kanalsystem (10) mit Kanälen (11,12,13) aufweist,

   dass sie einen ersten motorischen Antrieb (1) aufweist, der über eine Spindel (1′) die an einer Kolbenstange (7) verschiebbaren Kolben (6) antreibt,

   dass sie einen zweiten motorischen Antrieb (2) aufweist, der über eine Spindel (2′) die Trägerplatte (3) retativ zur Ventilplatte quer zur Bewegungsrichtung der Kolben (7) verschiebbar antreibt,

   und dass sie eine Federkraft ausübende Mittel aufweist, die die Auslaufenden der Pipetten (5) federnd und bei Bedarf verschiebbar gegen die Ventilplatte (4) pressen.

2. Vorrichtung nach Anspruch 1, dadurch gekennzeichnet, dass eine Fläche der Ventilplatte drei Oeffnungen für Kanäle (11,12,13) zum Zu- und-/oder Wegführen von Flüssigmedien aufweist.

3. Vorrichtung nach einem der Ansprüche 1 bis 2, dadurch gekennzeichnet, dass die Spritzentülle (5′) der Pipetten (5) in der Trägerplatte (3) eine Transferzone im Transferspalt (20) bilden, in welchem die Tüllen (5′) von einem Einlass zu den Kanälen (11,12,13) zum anderen verschiebbar sind.

4. Vorrichtung nach einem der Ansprüche 1 bis 3, dadurch gekennzeichnet, dass die eine Federkraft ausübenden Mittel Federn, Elastomere und dergleichen sind.

5. Vorrichtung nach einem der Ansprüche 1 bis 4 dadurch gekennzeichnet, dass die Pipetten (5) handelsübliche Plastikspritzen sind und dass auf deren Tülle (5′) ein Abdichtungsring (5″) bspw. aus Teflon aufgesetzt ist.

6. Vorrichtung nach einem der vorangegangenen Ansprüche, gekennzeichnet durch die regelmässige Anordnung von einer Vielzahl von Pipetten.

7. Vorrichtung nach Anspruch 6, dadurch gekennzeichnet, dass die Anordnung in Anzahl und Abmessung zueinander den vorhandenen Kavitäten einer Mikrotiterplatte entspricht.

8. Vorrichtung nach einem der Ansprüche 1 bis 7, dadurch gekennzeichnet, dass die Trägerplatte gegen den Gegendruck der Federmittel der einzelnen Pipetten mittels Federdruck, der grösser ist als die Summe aller Federdrücke der Pipetten, auf die Ventilplatte gepresst ist.

**Claims**

1. Apparatus for dosing liquid with a plurality of simultaneously operable dosing pumps, preferably pipettes (5), which are operated by in each case one piston (6), characterized in that it has a carrier plate (3), in which the pipettes (5) are arranged in through openings, that it has a valve plate (4) parallel to the carrier plate (3) and against which are directed the delivery ends of the pipettes and which has a channel system (10) with channels (11, 12, 13), that it has a first motor drive (1), which by means of a spindle (1') drives the piston (6) displaceable on a piston rod (7), that it has a second motor drive (2), which, by means of a spindle (2'), displaceably drives the carrier plate (3) relative to the valve plate at right angles to the movement direction of the piston (7) and that it has a means exerting a spring tension pressing the delivery ends of the pipettes (5) resiliently and, if necessary, displaceably against the valve plate (4).

2. Apparatus according to claim 1, characterized in that one surface of the valve plate has three openings for channels (11, 12, 13) for supplying and/or removing liquid media.

3. Apparatus according to one of the claims 1 and 2, characterized in that the spray nozzles (5') of the pipettes (5) in the carrier plate (3) form a transfer zone in the transfer gap (20), in which the nozzles (5') are displaceable from one inlet to the other with respect to the channels (11, 12, 13).

4. Apparatus according to one of the claims 1 to 3, characterized in that the spring tension exerting means are springs, elastomers and the like.

5. Apparatus according to one of claims 1 to 4, characterized in that the pipettes (5) are commercially available plastic spraying means and that a sealing ring (5''), e.g. made from Teflon is engaged on the nozzle (5') thereof.

6. Apparatus according to one of the preceding claims, characterized by the regular arrangement of a plurality of pipettes.

7. Apparatus according to claim 6, characterized in that as regards numbers and dimensions the arrangement corresponds to the cavities of a microtitre plate.

8. Apparatus according to one of the claims 1 to 7, characterized in that the carrier plate is pressed onto the valve plate in opposition to the counterpressure of the spring means of the individual pipettes by means of spring tension, which is higher than he sum of all the spring tensions of the pipettes.

**Revendications**

1. Dispositif pour le pipetage de liquides avec une pluralité de pompes de dosage, de préférence des pipettes (5) pouvant être actionnées simultanément, dont chacune est actionnée par un piston (6), caractérisé
   en ce qu'il présente une plaque de support (3) dans laquelle les pipettes (5) sont disposées dans des ouvertures traversantes,
   en ce qu'il présente une plaque de soupape (4) disposée parallèlement à la plaque de support (3), vers laquelle sont orientées les extrémités d'écoulement des pipettes et qui présente un système de canaux (10) avec des canaux (11, 12, 13),
   en ce qu'il présente un premier entraînement à moteur (1) qui entraîne les pistons (6) mobiles sur une tige de piston (7) par l'intermédiaire d'une broche (1'),
   en ce qu'il présente un second entraînement à moteur (2) qui entraîne par l'intermédiaire d'une broche (2') la plaque de support (3) par rapport à la plaque de soupape perpendiculairement au sens de déplacement des pistons (7), et
   en ce qu'il présente des moyens exerçant un effet de ressort, qui pressent les extrémités d'écoulement des pipettes (5) de manière élastique et mobile en cas de besoin contre la plaque de soupape (4).

2. Dispositif selon la revendication 1, caractérisé en ce qu'une surface de la plaque de soupape présente trois ouvertures pour des canaux (11, 12, 13) pour l'arrivée ou l'évacuation de substances liquides.

3. Dispositif selon l'une quelconque des revendications 1 et 2, caractérisé en ce que les douilles d'injection (5') des pipettes (5) forment dans la plaque de support (3) une zone de transfert dans la fente de transfert (20), dans laquelle les douilles (5') sont mobiles d'une entrée des canaux (11, 12, 13) à l'autre.

4. Dispositif selon l'une quelconque des revendications 1 à 3, caractérisé en ce que les moyens exerçant un effet de ressort sont des ressorts, des élastomères ou similaires.

5. Dispositif selon l'une quelconque des revendications 1 à 4, caractérisé en ce que les pipettes (5) sont des seringues en plastique courantes et en ce qu'un joint d'étanchéité (5") par exemple en téflon est posé sur leurs douilles (5').

6. Dispositif selon l'une quelconque des revendications précédentes, caractérisé en ce qu'une pluralité de pipettes sont disposées régulièrement.

7. Dispositif selon la revendication 6, caractérisé en ce que la disposition correspond en nombre et en dimensions relatives aux cavités existantes d'une plaque de microtitrage.

8. Dispositif selon l'une quelconque des revendications 1 à 7, caractérisé en ce que la plaque de support est pressée sur la plaque de soupape contre la contre-pression des moyens élastiques de chaque pipette au moyen d'un effet de ressort plus fort que la somme des pressions de ressorts des pipettes.

FIG. 1    FIG. 2    FIG. 3

EP 0 363 450 B1

FIG. 4

FIG. 5